# EUROPÄISCHE PATENTSCHRIFT

(11) **EP 2 764 219 B1**
(45) Veröffentlichungstag und Bekanntmachung des Hinweises auf die Patenterteilung: **23.03.2016**
(21) Anmeldenummer: 12762211.6
(22) Anmeldetag: 07.09.2012
(51) Int. Cl.: F01M 5/00, F02G 5/02

(54) **BRENNKRAFTMASCHINE SOWIE VERFAHREN ZUM BETREIBEN EINER BRENNKRAFTMASCHINE**
ENGINE AND METHOD FOR RUNNING THE SAME
MOTEUR ET PROCÉDÉ D'OPERATION DUDIT MOTEUR

(30) Priorität: 23.09.2011 DE 102011114305
(43) Veröffentlichungstag der Anmeldung: 13.08.2014
(73) Patentinhaber: Audi AG, 85045 Ingolstadt (DE)
(72) Erfinder: HALL, Matthew, 71672 Marbach am Neckar (DE)
(86) Internationale Anmeldenummer: PCT/EP2012/003753
(87) Internationale Veröffentlichungsnummer: WO 2013/041188

(56) Entgegenhaltungen:
- DE-A1- 3 002 098
- DE-A1- 3 032 090
- DE-A1- 10 107 018
- JP-A- 61 135 911

## Beschreibung

Die Erfindung betrifft eine Brennkraftmaschine, mit einem Kurbelgehäuse und einem Zylinderkopf, der in einen Abgaskrümmer einmündende Auslasskanäle für Abgas aus Brennräumen der Brennkraftmaschine aufweist. Die Erfindung betrifft weiterhin ein Verfahren zum Betreiben einer Brennkraftmaschine.

Brennkraftmaschinen der eingangs genannten Art sind aus dem Stand der Technik bekannt. Sie weisen insbesondere das Kurbelgehäuse, auch als Motorblock bezeichnet, und den Zylinderkopf auf. Das Kurbelgehäuse und der Zylinderkopf bilden gemeinsam die Brennräume der Brennkraftmaschine aus, wobei zum Beispiel das Kurbelgehäuse die Brennräume in Form von in Richtung des Zylinderkopfs randoffenen Ausnehmungen zumindest größtenteils aufweist und der Zylinderkopf diese lediglich nach abschließt. Das Kurbelgehäuse kann weiterhin einen Kühlmantel und ein Triebwerksgehäuse der Brennkraftmaschine umfassen. In dem Zylinderkopf sind häufig Ladungswechselorgane der Brennkraftmaschine, also insbesondere Ventile, vorgesehen. Die Ladungswechselorgane dienen dem Ein- beziehungsweise Auslassen von Luft beziehungsweise Abgasen in die Brennräume. Auch eine Nockenwelle der Brennkraftmaschine kann in dem Zylinderkopf angeordnet sein. Aus den Brennräumen der Brennkraftmaschine, insbesondere über die Ladungswechselorgane, strömt Abgas in die Auslasskanäle ein. Von diesen gelangt es in den Abgaskrümmer und anschließend in einen Abgastrakt der Brennkraftmaschine, über welchen sie in eine Umgebung der Brennkraftmaschine, insbesondere über eine Abgasreinigungseinrichtung, abgeführt werden.

In einem Warmlaufbetrieb der Brennkraftmaschine, also bei geringer Temperatur der Brennkraftmaschine, entstehen in dieser unerwünschte Reibungskräfte, beispielsweise zwischen Wandungen der Brennräume und in den Brennräumen angeordneten Kolben. Es ist daher das Ziel, die Temperatur der Brennkraftmaschine möglichst schnell zu erhöhen und damit den Warmlaufbetrieb zu verkürzen, um die Reibungskräfte zu minimieren. Das aus den Brennräumen der Brennkraftmaschine ausströmende Abgas ist, bedingt durch die in den Brennräumen ablaufenden Verbrennungsvorgänge, schnell heiß. Es ist daher aus dem Stand der Technik bekannt, beispielsweise aus der DE 101 07 018 A1, die Temperatur des Abgases zum Beheizen von Schmieröl eines Schmierölkreislaufs einer Brennkraftmaschine zu verwenden. Zu diesem Zweck ist in der genannten Schrift ein Wärmerohr zwischen Abgas führenden Teilen und dem Schmierölkreislauf beschrieben. Diese Vorgehensweise hat jedoch den Nachteil, dass zum einen der übertragene Wärmestrom (Wärmemenge pro Zeiteinheit) durch das Wärmerohr begrenzt ist, und dass zum anderen lediglich das Schmieröl aufgeheizt wird, was den Aufwärmbetrieb der Brennkraftmaschine nur geringfügig verkürzt und die Reibungskräfte lediglich mittelbar beeinflusst.

Es ist daher Aufgabe der Erfindung, eine Brennkraftmaschine vorzustellen, welche die eingangs genannten Nachteile nicht aufweist, sondern ihre Betriebstemperatur deutlich schneller erreicht als aus dem Stand der Technik bekannte Brennkraftmaschinen. Somit wird die Zeitdauer des Aufwärmbetriebs deutlich verringert und der Gesamtwirkungsgrad der Brennkraftmaschine verbessert.

Dies wird erfindungsgemäß erreicht, indem der Zylinderkopf wenigstens einen Bereich eines von Auslasskanälen und Abgaskrümmer verschiedenen Heizkanals aufweist, dessen Einlassseite von einem der Auslasskanäle oder dem Abgaskrümmer abzweigt und der von einem mittels eines Stellglieds einstellbaren Abgasmassenstrom durchströmbar ist. Die Wärme des Abgases soll also nicht, wie aus dem Stand der Technik bekannt, lediglich mittelbar über ein Fluid, insbesondere Schmieröl, der Brennkraftmaschine wieder zugeführt werden. Vielmehr ist es vorgesehen, dass das aus den Brennräumen ausströmende Abgas zumindest teilweise in den Heizkanal einströmt und durch diesen zu Bereichen der Brennkraftmaschine, insbesondere in den Zylinderkopf, geführt wird, in welchen bei niedriger Temperatur besonders starke Reibungskräfte auftreten. Dabei ist die Einlassseite des Heizkanals an wenigstens einen der Auslasskanäle beziehungsweise den Abgaskrümmer angeschlossen, sodass Abgas von dem Auslasskanal beziehungsweise dem Abgaskrümmer in den Heizkanal gelangen kann. Hierzu ist insbesondere anzumerken, dass der Heizkanal von den Auslasskanälen und dem Abgaskrümmer separat ausgebildet wird, von diesen also verschieden ist. Das Abgas wird insoweit ab dem Abzweigen des Heizkanals von dem Auslasskanal beziehungsweise dem Abgaskrümmer parallel zu diesen in dem Heizkanal geführt.

Dabei soll der Abgasmassenstrom, von welchem der Heizkanal durchströmt wird, mittels des Stellglieds einstellbar ist. Das Stellglied kann sich prinzipiell an einer beliebigen Position befinden. Bevorzugt liegt es jedoch in dem Heizkanal, insbesondere unmittelbar nach dessen Einlass vor. Das Stellglied ist vorzugsweise als Querschnittsverstellglied ausgeführt, welches derart gesteuert und/oder geregelt ist, dass der Heizkanal von dem vorgegebenen Abgasmassenstrom durchströmt wird beziehungsweise durchströmbar ist.

Auf diese Weise kann über das Stellglied eine Strömungsverbindung zwischen den Auslasskanälen beziehungsweise dem Abgaskrümmer und zumindest dem Zylinderkopf hergestellt werden. Der Zylinderkopf wird bei wenigstens teilweise geöffnetem Stellglied demnach nicht nur durch die Auslasskanäle beziehungsweise den Abgaskrümmer von dem Abgas durchströmt, sondern zusätzlich auch durch den Heizkanal. Der Heizkanal ist dabei insbesondere in dem Zylinderkopf zu Bereichen geführt, welche während des Aufwärmbetriebs der Brennkraftmaschine schnell aufgewärmt werden sollen. Die Brennkraftmaschine erreicht insoweit ihre Betriebstemperatur deutlich schneller als aus dem Stand der Technik bekannte Brennkraftmaschinen.

Der Heizkanal soll vorzugsweise lediglich während des Aufwärmbetriebs von Abgas durchströmt werden. Zusätzlich oder alternativ kann es jedoch auch vorgesehen sein, dass der Heizkanal während eines Normalbetriebs der Brennkraftmaschine, welcher sich an den Aufwärmbetrieb anschließt, mit Abgas durchströmt wird, um die Temperatur der Brennkraftmaschine zu erhöhen. Auf diese Weise kann in bestimmten Betriebsbereichen der Brennkraftmaschine ihr Wirkungsgrad erhöht werden.

Eine Weiterbildung der Erfindung sieht vor, dass der Heizkanal lediglich in dem Zylinderkopf vorliegt oder dass der Heizkanal sich zusätzlich in das Kurbelgehäuse erstreckt. In einer ersten Ausführungsform der Brennkraftmaschine durchläuft der Heizkanal lediglich den Zylinderkopf, liegt also in keinen weiteren Bereichen der Brennkraftmaschine vor. In einer bevorzugten Ausführungsform erstreckt er sich jedoch zusätzlich in das Kurbelgehäuse. Zu diesem Zweck liegt eine Strömungsverbindung zwischen einem Bereich des Heizkanals in dem Zylinderkopf und einem Bereich des Heizkanals in dem Kurbelgehäuse vor. Bevorzugt ist diese Strömungsverbindung derart ausgestaltet, dass bei einer Montage der Brennkraftmaschine der Zylinderkopf lediglich auf das Kurbelgehäuse aufgesetzt und an diesem befestigt werden muss, um die Strömungsverbindung herzustellen. Beispielsweise mündet der Heizkanal dazu randoffen in eine Kontaktfläche des Zylinderkopfs ein, mit welcher dieser nach der Montage in Berührkontakt mit dem Kurbelgehäuse beziehungsweise einer korrespondierenden Kontaktfläche des Kurbelgehäuses steht. Das Kurbelgehäuse weist eine mit dieser randoffenen Einmündung korrespondierende weitere Einmündung auf. Ein erster Bereich des Heizkanals liegt entsprechend in dem Zylinderkopf und ein zweiter Bereich in dem Kurbelgehäuse vor. Die erste Einmündung ist nun dem ersten Bereich und die weitere Einmündung dem zweiten Bereich zugeordnet. Nach der Montage von Zylinderkopf und Kurbelgehäuse stehen die beiden Bereiche des Heizkanals über die miteinander korrespondierenden randoffenen Einmündungen in Strömungsverbindung.

Eine Weiterbildung der Erfindung sieht vor, dass der Heizkanal - in axialer Richtung gesehen - alle Brennräume der Brennkraftmaschine übergreift. Häufig liegen wenigstens einige der Brennräume der Brennkraftmaschine in Längsrichtung angeordnet vor. Dies ist insbesondere für Reihen-Vierzylinderbrennkraftmaschinen und Reihen-Sechszylinderbrennkraftmaschinen und dergleichen der Fall. Für Brennkraftmaschinen mit Brennräumen in V-Anordnung liegen mehrere, insbesondere zwei, Brennraumgruppen mit vorzugsweise jeweils mehreren in axialer Richtung zueinander angeordneten Brennräumen vor. In diesem Fall übergreift der Heizkanal zumindest die Brennräume einer der Brennraumgruppen der Brennkraftmaschine in axialer Richtung. Auf diese Weise wird eine gleichmäßige Erwärmung des Zylinderkopfs, insbesondere im Bereich der Brennräume, erreicht, sodass die zwischen Kolben und Brennraumwandung entstehenden Reibungskräfte für alle Brennräume verringert werden.

Eine Weiterbildung der Erfindung sieht vor, dass sich der Heizkanal wenigstens bereichsweise parallel zu wenigstens einer Fluidleitung, insbesondere Ölleitung oder Wasserleitung, erstreckt. Somit kann nicht nur der Zylinderkopf und/oder das Kurbelgehäuse der Brennkraftmaschine unmittelbar erwärmt werden. Vielmehr soll zusätzlich auch das Fluid durch das heiße, den Heizkanal durchströmende Abgas aufgewärmt werden. Zu diesem Zweck verläuft die Fluidleitung benachbart zu dem Heizkanal und parallel zu diesem. Dabei ist der Abstand zwischen dem Heizkanal und der Fluidleitung - in radialer Richtung gesehen - ausreichend klein, um einen effektiven Wärmetransport durch Wärmeleitung zu bewirken. Besonders bevorzugt kann es auch vorgesehen sein, dass sich der Heizkanal durch die Fluidleitung, insbesondere koaxial zu dieser, erstreckt. Der Heizkanal liegt insoweit in der Fluidleitung vor und ist fluidtechnisch durch eine Wand, vorzugsweise aus einem gut wärmeleitenden Material, von dieser getrennt. Beispielsweise liegt der Heizkanal in Form eines Heizrohrs vor, welches in der Fluidleitung wenigstens bereichsweise angeordnet ist.

Eine Weiterbildung der Erfindung sieht mehrere Heizkanäle vor, die jeweils unterschiedlichen Brennraumgruppen zugeordnet sind. Wie bereits vorstehend ausgeführt, sind die Brennräume insbesondere für Brennkraftmaschinen mit V-Anordnung der Brennräume, in Brennraumgruppen aufgeteilt. Liegen mehrere Brennraumgruppen vor, so ist es vorteilhaft, jeder Brennraumgruppe einen separaten Heizkanal zuzuordnen, um ein gleichmäßiges Erwärmen des Zylinderkopfs beziehungsweise des Kurbelgehäuses im Bereich der Brennraumgruppen zu ermöglichen.

Eine Weiterbildung der Erfindung sieht vor, dass die Heizleitung - in Strömungsrichtung des Abgases gesehen - parallel zu einem Hauptabgasstrom durch die Auslasskanäle und den Abgaskrümmer vorliegt und das durch den Heizkanal geführte Abgas von dessen Einlassseite zu einer stromabwärts der Einlassseite in einen der Auslasskanäle oder den Abgaskrümmer einmündende Auslassseite gelangt. Das Abgas strömt insoweit aus den Brennräumen der Brennkraftmaschine durch die Auslasskanäle in den Abgaskrümmer und von diesem in Richtung des Abgastrakts. Dieses Abgas stellt dem Hauptabgasstrom dar. Das von den Auslasskanälen beziehungsweise dem Abgaskrümmer in den Heizkanal abgezweigte Abgas bildet einen Nebenabgasstrom, welches einen geringeren Abgasmassenstrom aufweist als der Hauptabgasstrom. Der Nebenabgasstrom durch den Heizkanal verläuft also im Wesentlichen parallel zu dem Hauptabgasstrom. Das Abgas strömt insoweit auf der Einlassseite des Heizkanals von den Auslasskanälen beziehungsweise dem Abgaskrümmer in den Heizkanal ein und wird auf der Auslassseite des Heizkanals wieder dem Hauptstrom in dem Auslasskanal beziehungsweise dem Abgaskrümmer zugeführt. Der Heizkanal stellt insoweit eine strömungstechnische Verbindung zwischen seiner Einlassseite und seiner Auslassseite dar.

Eine Weiterbildung der Erfindung sieht vor, dass stromabwärts der Einmündung der Auslassseite eine Turbine eines Abgasturboladers strömungstechnisch an den Abgaskrümmer angeschlossen ist oder der Heizkanal das Abgas der Turbine unmittelbar zuführt. Die Brennkraftmaschine verfügt also über den Abgasturbolader, welcher dazu dient, Luft mittels eines Verdichters zu verdichten und sie mit dem dabei erzielten höheren Druckniveau den Brennräumen zuzuführen. Auf diese Weise kann eine Verbesserung des Wirkungsgrads der Brennkraftmaschine erzielt werden. Der Verdichter des Abgasturboladers wird mittels dessen Turbine angetrieben, welche von Abgas überströmt wird. Dabei wird dem Abgas kinetische Energie entnommen und in mechanische Rotationsenergie umgewandelt, welche dem Antrieb des Verdichters dient. Es ist nun vorgesehen, dass die Auslassseite stromaufwärts der Turbine des Abgasturboladers wieder in die Auslasskanäle beziehungsweise den Abgaskrümmer einmündet. Alternativ kann auch der Heizkanal unmittelbar in die Turbine einmünden und dieser das Abgas des Nebenabgasstroms zuführt.

Die Erfindung betrifft weiterhin ein Verfahren zum Betreiben einer Brennkraftmaschine, insbesondere einer Brennkraftmaschine gemäß den vorstehenden Ausführungen, wobei die Brennkraftmaschine über ein Kurbelgehäuse und einen Zylinderkopf verfügt, der in einen Abgaskrümmer einmündende Auslasskanäle für Abgas aus Brennräumen der Brennkraftmaschine aufweist. Dabei ist vorgesehen, dass der Zylinderkopf wenigstens einen Bereich eines von Auslasskanälen und Abgaskrümmer verschiedenen Heizkanals aufweist, dessen Einlassseite von einem der Auslasskanäle oder dem Abgaskrümmer abzweigt, wobei ein den Heizkanal durchströmender Massenstrom mittels eines Stellglieds eingestellt wird. Die Brennkraftmaschine kann gemäß den vorstehenden Ausführungen weitergebildet sein.

Eine Weiterbildung der Erfindung sieht vor, dass das Stellglied geöffnet wird, wenn eine Fluidtemperatur der Brennkraftmaschine, insbesondere eine Öltemperatur oder Wassertemperatur, kleiner als eine Betriebstemperatur ist. Dies ist insbesondere während des Aufwärmbetriebs der Brennkraftmaschine der Fall, in welchem die Temperatur der gesamten Brennkraftmaschine unterhalb der Betriebstemperatur liegt. Das Stellglied wird also insbesondere während des Aufwärmbetriebs geöffnet. Es kann jedoch auch vorgesehen sein, dass das Stellglied während eines Normalbetriebs der Brennkraftmaschine, welche auf den Aufwärmbetrieb folgt, geöffnet wird, um das Fluid mittels des den Heizkanal durchströmenden Abgases aufzuwärmen und entsprechend die Fluidtemperatur zur vergrößern. Dies wird solange durchgeführt, bis die Fluidtemperatur die Betriebstemperatur erreicht. Entspricht die Fluidtemperatur der Betriebstemperatur oder ist größer als diese, so wird das Stellglied wieder geschlossen. Insbesondere wird das Stellglied steuernd und/oder regelnd derart eingestellt, dass die Fluidtemperatur der Betriebstemperatur stets entspricht. Unter dem beschriebenen Öffnen ist auch ein lediglich teilweises Öffnen zu verstehen.

Eine Weiterbildung der Erfindung sieht vor, dass das Fluid aus einem Fluidvorrat durch eine wenigstens teilweise parallel zu dem Heizkanal verlaufende Fluidleitung und zurück in den Fluidvorrat gefördert wird. Um das Fluid möglichst schnell zu erwärmen und auf die Betriebstemperatur zu bringen, ist es vorgesehen, dass das Fluid aus dem Fluidvorrat in Richtung der Brennkraftmaschine beziehungsweise dem wenigstens den Zylinderkopf durchlaufenden Heizkanal gefördert wird. Das Fluid durchläuft dabei vorzugsweise die Fluidleitung, welche wenigstens bereichsweise parallel zu dem Heizkanal angeordnet ist. Auf eine solche Ausführungsform wurde bereits vorstehend eingegangen. Nach dem Durchlaufen der Fluidleitung wird das nun erwärmte Fluid zurück in den Fluidvorrat gefördert. Auf diese Weise werden sowohl die Brennkraftmaschine als auch das Fluid in dem Fluidvorrat mittels des Abgases erwärmt.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: einen Querschnitt durch eine Brennkraftmaschine, und
- Figur 2: einen Längsschnitt durch die Brennkraftmaschine.

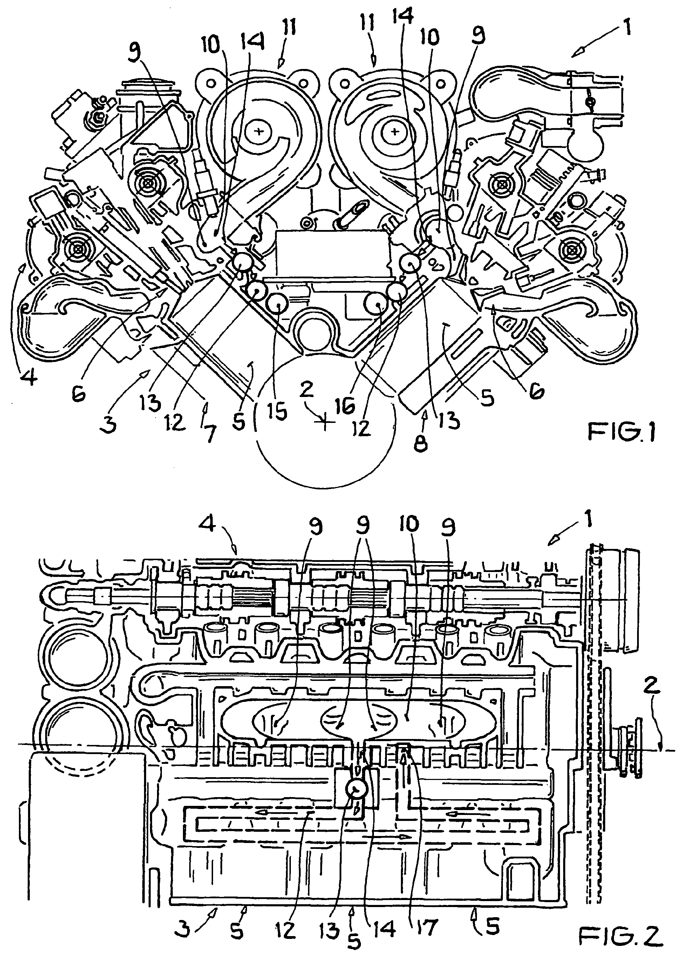

Die Figur 1 zeigt einen Querschnitt durch eine Brennkraftmaschine 1, wobei die Schnittebene senkrecht auf einer Längsachse 2 der Brennkraftmaschine 1 steht. Die Brennkraftmaschine 1 verfügt über ein Kurbelgehäuse 3 und einen Zylinderkopf 4, wobei in dem Kurbelgehäuse 3 Brennräume 5 vorliegen, die nach oben von dem Zylinderkopf 4 begrenzt sind. In den Brennräumen 5 beziehungsweise Zylindern sind hier nicht dargestellte Kolben der Brennkraftmaschine 1 angeordnet, welche mit einer Kurbelwelle zum Bereitstellen eines Antriebsmoments zusammenwirken. In dem Zylinderkopf 4 sind Gaswechselelemente 6, insbesondere Ventile, angeordnet, welche dem Einlassen von Luft in die Brennräume 5 beziehungsweise dem Auslassen von Abgas aus diesen dienen. Es ist unschwer erkennbar, dass die Brennräume 5 der Brennkraftmaschine 1 in einer V-Anordnung vorliegen, sodass eine erste Brennraumgruppe 7 und eine zweite Brennraumgruppe 8 auf gegenüberliegenden Seiten der Brennkraftmaschine 1 angeordnet sind. Jeder der Brennraumgruppen 7 und 8 umfasst wenigstens einen Brennraum 5; vorzugsweise mehrere Brennräume 5, die in axialer Richtung hintereinander angeordnet sind. Nach einer Verbrennung in den Brennräumen 5 strömt Abgas durch die entsprechenden Gaswechselelemente 6 über Auslasskanäle 9 in einen Abgaskrümmer 10. Vorzugsweise ist jedem Brennraum 5 ein Auslasskanal 9 zugeordnet. Jeder der Auslasskanäle 9 mündet in den Abgaskrümmer 10 ein. Der Abgaskrümmer 10 dient insoweit dem Sammeln der Abgase aus den Auslasskanälen 9. Über den Abgaskrümmer 10 wird das Abgas einem Verdichter eines Abgasturboladers 11 zugeführt, wobei in dem hier dargestellten Ausführungsbeispiel jeder Brennraumgruppe 7 und 8 jeweils ein Abgasturbolader 11 zugeordnet ist.

Um während eines Aufwärmbetriebs der Brennkraftmaschine 1 die Zeitdauer des Aufwärmens zu verkürzen, ist es vorgesehen, dass der Zylinderkopf wenigstens einen Bereich eines von den Auslasskanälen 9 und dem Abgaskrümmer 10 verschiedenen Heizkanals 12 aufweist. Es ist hier wiederum deutlich erkennbar, dass jeder Brennraumgruppe 7 und 8 jeweils ein Heizkanal 12 zugeordnet ist. Alternativ kann jedoch auch lediglich ein gemeinsamer Heizkanal 12 für beide Brennraumgruppen 7 und 8 vorgesehen sein. Die Heizkanäle 12 sind über Stellglieder 13 mit den Auslasskanälen 9 beziehungsweise mit dem Abgaskrümmer 10 verbunden. In der hier darstellten Ausführungsform zweigt eine Einlassseite 14 unmittelbar nach dem Zusammenführen der Auslasskanäle 9 in den Abgaskrümmer 10 von letzterem ab. Mittels der Stellglieder 13, welche als Querschnittsverstellglieder, bevorzugt als Ventile, ausgeführt sind, lassen sich die die Heizkanäle 12 durchströmenden Abgasmassenströme, insbesondere getrennt voneinander, steuernd und/oder regelnd einstellen. Besonders bevorzugt sind die Heizkanäle 12 wenigstens teilweise im Bereich von Fluidleitungen 15 und 16 angeordnet, wobei die Fluidleitung 15 als Wasserleitung und die Fluidleitung 16 als Ölleitung ausgebildet sind.

Die Figur 2 zeigt einen Längsschnitt durch die Brennkraftmaschine 1, wobei die Längsachse 2 in der Schnittebene liegt. Es wird deutlich, dass der Heizkanal 12 mit seiner Einlassseite 14 derart in den Abgaskrümmer 10 einmündet, dass er unmittelbar mit aus den Auslasskanälen 9 ausströmendem Abgas beaufschlagt ist. Eine Auslassseite 17 des Heizkanals 12 mündet dagegen derart in den Abgaskrümmer 10 ein, dass er - in axialer Richtung gesehen - zu den Auslasskanälen 9 beziehungsweise deren Einmündungen in den Abgaskrümmer 10 beabstandet beziehungsweise versetzt liegt. Die Auslassseite 17 wird insoweit nicht unmittelbar mit dem aus den Auslasskanälen 9 in den Abgaskrümmer 10 einströmenden Abgas beaufschlagt. Durch die kinetische Energie des Abgases, welches durch die Auslasskanäle 9 in den Abgaskrümmer 10 eintritt, entsteht insoweit ein Staudruck, welcher das Abgas auf der Einlassseite 14 in den Heizkanal 12 hineindrängt.

Das Abgas kann demnach, in Abhängigkeit von einer Stellung des Stellglieds 13, den Heizkanal 12 von seiner Einlassseite 14 in Richtung seiner Auslassseite 17 durchströmen. Auf der Auslassseite 17 tritt es wieder in den Abgaskrümmer 10 ein und wird durch diesen zusammen mit dem Hauptabgasstrom, welcher nicht durch den Heizkanal 12 läuft, abgeführt wird. Es wird deutlich, dass der hier dargestellte Heizkanal 12 in axialer Richtung gesehen alle Brennräume der Brennkraftmaschine 1 übergreift. Auf diese Weise wird eine gleichmäßige Erwärmung der Brennkraftmaschine 1, insbesondere im Bereich der Brennräume 5, sichergestellt. Der Heizkanal 12 liegt zumindest in dem Zylinderkopf 4 vor. In dem hier dargestellten Ausführungsbeispiel durchgreift er zusätzlich das Kurbelgehäuse 3. Somit liegt ein erster Bereich des Heizkanals 12 in dem Kurbelgehäuse 3 und ein zweiter Bereich in dem Zylinderkopf 4 vor. Die Bereiche sind derart angeordnet, dass sie Kontaktflächen von Kurbelgehäuse 3 und Zylinderkopf 4, über welche diese bei einer Montage der Brennkraftmaschine 1 in Verbindung treten, derart randoffen durchgreifen, dass nach einer Montage des Zylinderkopfs 4 an dem Kurbelgehäuse 3 automatisch eine Strömungsverbindung zwischen dem ersten Bereich und dem zweiten Bereich des Heizkanals 12 vorliegt.

### BEZUGSZEICHENLISTE

- 1: Brennkraftmaschine
- 2: Längsachse
- 3: Kurbelgehäuse
- 4: Zylinderkopf
- 5: Brennräume
- 6: Gaswechselelemente
- 7: 1. Brennraumgruppe
- 8: 2. Brennraumgruppe
- 9: Auslasskanal
- 10: Abgaskrümmer
- 11: Abgasturbolader
- 12: Heizkanal
- 13: Stellglied
- 14: Einlassseite
- 15: Fluidleitung (Wasser)
- 16: Fluidleitung (Öl)
- 17: Auslassseite

## Patentansprüche

1. Brennkraftmaschine (1), mit einem Kurbelgehäuse (3) und einem Zylinderkopf (4), der in einen Abgaskrümmer (10) einmündende Auslasskanäle (9) für Abgas aus Brennräumen (5) der Brennkraftmaschine (1) aufweist, **dadurch gekennzeichnet, dass** der Zylinderkopf (4) wenigstens einen Bereich eines von Auslasskanälen (9) und Abgaskrümmer (10) verschiedenen Heizkanals (12) aufweist, dessen Einlassseite (14) von einem der Auslasskanäle (9) oder dem Abgaskrümmer (10) abzweigt und der von einem mittels eines Stellglieds (13) einstellbaren Abgasmassenstrom durchströmbar ist.

2. Brennkraftmaschine nach Anspruch 1, **dadurch gekennzeichnet, dass** der Heizkanal (12) lediglich in dem Zylinderkopf (4) vorliegt oder dass der Heizkanal (12) sich zusätzlich in das Kurbelgehäuse (3) erstreckt.

3. Brennkraftmaschine nach einem der vorhergehenden Ansprüche, **dadurch gekennzeichnet, dass** der Heizkanal (12) - in axialer Richtung gesehen - alle Brennräume (5) der Brennkraftmaschine (1) übergreift.

4. Brennkraftmaschine nach einem der vorhergehenden Ansprüche, **dadurch gekennzeichnet, dass** sich der Heizkanal (12) wenigstens bereichsweise parallel zu wenigstens einer Fluidleitung (15,16), insbesondere Ölleitung (16) oder Wasserleitung (15), erstreckt.

5. Brennkraftmaschine nach einem der vorhergehenden Ansprüche, **dadurch gekennzeichnet, dass** mehrere Heizkanäle (12) vorgesehen sind, die jeweils unterschiedlichen Brennraumgruppen (7,8) zugeordnet sind.

6. Brennkraftmaschine nach einem der vorhergehenden Ansprüche, **dadurch gekennzeichnet, dass** die Heizleitung (12) - in Strömungsrichtung des Abgases gesehen - parallel zu einem Hauptabgasstrom durch die Auslasskanäle (9) und den Abgaskrümmer (10) vorliegt und das durch den Heizkanal (12) geführte Abgas von dessen Einlassseite (14) zu einer stromabwärts der Einlassseite (14) in einen der Auslasskanäle (9) oder den Abgaskrümmer (10) einmündende Auslassseite (17) gelangt.

7. Brennkraftmaschine nach einem der vorhergehenden Ansprüche, **dadurch gekennzeichnet, dass** stromabwärts der Einmündung der Auslassseite (17) eine Turbine eines Abgasturboladers (11) strömungstechnisch an den Abgaskrümmer (10) angeschlossen ist oder der Heizkanal (12) das Abgas der Turbine unmittelbar zuführt.

8. Verfahren zum Betreiben einer Brennkraftmaschine (1), insbesondere einer Brennkraftmaschine (1) nach einem oder mehreren der vorhergehenden Ansprüche, wobei die Brennkraftmaschine (1) über ein Kurbelgehäuse (3) und einen Zylinderkopf (4) verfügt, der über einen Abgaskrümmer (10) einmündende Auslasskanäle (9) für Abgas aus Brennräumen (5) der Brennkraftmaschine (1) aufweist, **dadurch gekennzeichnet, dass** der Zylinderkopf (4) wenigstens einen Bereich eines von Auslasskanälen (9) und Abgaskrümmer (10) verschiedenen Heizkanals (12) aufweist, dessen Einlassseite (14) von einem der Auslasskanäle (9) oder dem Abgaskrümmer (10) abzweigt, wobei ein den Heizkanal (12) durchströmender Abgasmassenstrom mittels eines Stellglieds (13) eingestellt wird.

9. Verfahren nach Anspruch 8, **dadurch gekennzeichnet, dass** das Stellglied (13) geöffnet wird, wenn eine Fluidtemperatur der Brennkraftmaschine (1), insbesondere eine Öltemperatur oder Wassertemperatur, kleiner als eine Betriebstemperatur ist.

10. Verfahren nach einem der vorhergehenden Ansprüche, **dadurch gekennzeichnet, dass** Fluid aus einem Fluidvorrat durch eine wenigstens teilweise parallel zu dem Heizkanal (12) verlaufende Fluidleitung (15,16) und zurück in den Fluidvorrat gefördert wird.

## Claims

1. Internal combustion engine (1) with a crank casing (3) and a cylinder head (4) having outlet channels (9), opening into an exhaust gas chamber (10), for exhaust gas from combustion chambers (5) of the internal combustion engine (1), **characterised in that** the cylinder head (4) has at least one section of a heating channel (12), differing from outlet channels (9) and exhaust manifold (10), the inlet side of which (14) branches off one of the outlet channels (9) or the exhaust manifold (10) and through which an exhaust gas mass flow can flow that can be adjusted by means of a controlling element (13).

2. Internal combustion engine according to claim 1 **characterised in that** the heating channel (12) is only present in the cylinder head (4) or **in that** the heating channel (12) additionally extends into the crank casing (3).

3. Internal combustion engine according to any one of the preceding claims **characterised in that**, seen in the axial direction, the heating channel (12) overlaps all the combustion chambers (5) of the internal combustion engine (1).

4. Internal combustion engine according to any one of the preceding claims **characterised in that** at least in sections the heating channel (12) extends in parallel to at least one fluid pipeline (15, 16), more particularly an oil pipeline (16) or water pipeline (15).

5. Internal combustion engine according to any one of the preceding claims **characterised in that** several heating channels (12) are provided which are each assigned to different combustion chamber groups (7, 8).

6. Internal combustion engine according to any one of the preceding claims **characterised in that** seen in the direction of flow of the exhaust gas, the heating pipeline (12) is in parallel to a main exhaust gas flow through the outlet channels (9) and the exhaust manifold (10) and **in that** the exhaust gases directed though the heating channel (12) move from the inlet side (14) thereof to an outlet side (17), which downstream of the inlet side (14) opens into one of the outlet channels (9) or the exhaust manifold (10).

7. Internal combustion machine according to any one of the preceding claims **characterised in that** downstream of the mouth of the outlet side (17) a turbine of an exhaust gas turboloader (11) is connected in a fluidic manner to the exhaust manifold (10) or the heating channel (12) directly feeds the exhaust gas to the turbine.

8. Method of operating an internal combustion engine (1), more particularly an internal combustion chamber (1) according to one or more of the preceding claims, wherein the internal combustion engine (1) has a crank casing (3) and a cylinder head (4) having outlet channels (9), opening into an exhaust gas chamber (10), for exhaust gas from combustion chambers (5) of the internal combustion engine (1), **characterised in that** the cylinder head (4) has at least one section of a heating channel (12), differing from outlet channels (9) and exhaust manifold (10), the inlet side of which (14) branches off one of the outlet channels (9) or the exhaust manifold (10) and through which an exhaust gas mass flow can flow that is adjusted by means of a controlling element (13).

9. Method according to claim 8 **characterised in that** the controlling element (13) is opened when a fluid temperature of the internal combustion chamber (1), more particularly an oil temperature or water temperature, is less than an operating temperature.

10. Method according to any one of the preceding claims **characterised in that** fluid from a fluid reservoir is conveyed through a fluid pipeline (15, 16), which is at least partially parallel to the heating channel (12), and back into the fluid reservoir.

## Revendications

1. Moteur à combustion interne (1), avec un carter (3) et une culasse (4) qui comporte des canaux d'échappement (9) débouchant dans un collecteur d'échappement (10) pour des gaz d'échappement sortant de chambres de combustion (5) du moteur à combustion interne (1), **caractérisé en ce que** la culasse (4) comporte au moins une zone d'un canal chauffant (12) qui est différent des canaux d'échappement (9) et du collecteur d'échappement (10) et dont le côté d'admission (14) s'embranche sur l'un des canaux d'échappement (9) ou sur le collecteur d'échappement (10) et qui peut être traversé par un flux massique de gaz d'échappement réglable au moyen d'un élément de réglage (13).

2. Moteur à combustion interne selon la revendication 1, **caractérisé en ce que** le canal chauffant (12) se trouve simplement dans la culasse (4) ou **en ce que** le canal chauffant (12) s'étend en plus dans le carter (3).

3. Moteur à combustion interne selon l'une des revendications précédentes, **caractérisé en ce que** le canal chauffant (12) - vu en direction axiale - passe par-dessus toutes les chambres de combustion (5) du moteur à combustion interne (1).

4. Moteur à combustion interne selon l'une des revendications précédentes, **caractérisé en ce que** le canal chauffant (12) s'étend au moins par zones parallèlement à au moins une conduite de fluide (15, 16), notamment une conduite d'huile (16) ou une conduite d'eau (15).

5. Moteur à combustion interne selon l'une des revendications précédentes, **caractérisé en ce que** plusieurs canaux chauffants (12) sont prévus, lesquels sont associés à chaque fois à des groupes de chambres de combustion (7, 8) différents.

6. Moteur à combustion interne selon l'une des revendications précédentes, **caractérisé en ce que** la conduite chauffante (12) - vue dans le sens d'écoulement du gaz d'échappement - passe parallèlement à un flux de gaz d'échappement principal à travers les canaux d'échappement (9) et le collecteur d'échappement (10) et **en ce que** le gaz d'échappement guidé à travers le canal chauffant (12) arrive à partir de son côté d'admission (14) jusqu'à un côté d'échappement (17) débouchant en aval du côté d'admission (14) dans l'un des canaux d'échappement (9) ou dans le collecteur d'échappement (10).

7. Moteur à combustion interne selon l'une des revendications précédentes, **caractérisé en ce que**, en aval du débouché du côté d'admission (17), une turbine d'un turbocompresseur (11) est raccordée pour les fluides au collecteur d'échappement (10) ou **en ce que** le canal chauffant (12) envoie directement le gaz d'échappement à la turbine.

8. Procédé de fonctionnement d'un moteur à combustion interne (1), notamment d'un moteur à combustion interne (1) selon l'une ou plusieurs des revendications précédentes, le moteur à combustion interne (1) disposant d'un carter (3) et d'une culasse (4) qui comporte des canaux d'échappement (9) débouchant dans un collecteur d'échappement (10) pour des gaz d'échappement sortant de chambres de combustion (5) du moteur à combustion interne (1), **caractérisé en ce que** la culasse (4) comporte au moins une zone d'un canal chauffant (12) qui est différent des canaux d'échappement (9) et du collecteur d'échappement (10) et dont le côté d'admission (14) s'embranche sur l'un des canaux d'échappement (9) ou sur le collecteur d'échappement (10), un flux massique de gaz d'échappement qui traverse le canal chauffant (12) étant réglable au moyen d'un élément de réglage (13).

9. Procédé selon la revendication 8, **caractérisé en ce que** l'élément de réglage (13) est ouvert lorsqu'une température de fluide du moteur à combustion interne (1), notamment une température d'huile ou une température d'eau, est inférieure à une température de fonctionnement.

10. Procédé selon l'une des revendications précédentes, **caractérisé en ce que** le fluide est transporté à partir d'un réservoir de fluide via une conduite de fluide (15, 16) s'étendant au moins en partie parallèlement au canal chauffant (12) et revient dans le réservoir de fluide.
